(19) Europäisches Patentamt / European Patent Office / Office européen des brevets

(11) **EP 3 942 217 B1**

(12) **FASCICULE DE BREVET EUROPEEN**

(45) Date de publication et mention
de la délivrance du brevet:
**13.05.2026 Bulletin 2026/20**

(21) Numéro de dépôt: **20714936.0**

(22) Date de dépôt: **18.03.2020**

(51) Classification Internationale des Brevets (IPC):
***F17C 1/00*** *(2006.01)*

(52) Classification Coopérative des Brevets (CPC):
**F17C 1/00;** F17C 2201/0109; F17C 2201/0119;
F17C 2201/052; F17C 2201/054; F17C 2203/013;
F17C 2203/0604; F17C 2203/0609;
F17C 2203/0619; F17C 2203/0621;
F17C 2203/0636; F17C 2203/066; F17C 2203/0673;
F17C 2205/0126; F17C 2209/234; (Cont.)

(86) Numéro de dépôt international:
**PCT/EP2020/057390**

(87) Numéro de publication internationale:
**WO 2020/193298 (01.10.2020 Gazette 2020/40)**

(54) **RESERVOIR DE PRESSION AVEC ELEMENTS DE RENFORTS CIRCONFERENTIELS**

DRUCKBEHÄLTER MIT UMLAUFENDEN VERSTÄRKENDEN ELEMENTEN

PRESSURE VESSEL WITH CIRCUMFERENTIAL REINFORCING ELEMENTS

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR

(30) Priorité: **22.03.2019 FR 1902979**

(43) Date de publication de la demande:
**26.01.2022 Bulletin 2022/04**

(73) Titulaire: **IFP Energies nouvelles**
**92852 Rueil-Malmaison (FR)**

(72) Inventeurs:
• **DUPIN, Victor**
**92852 Rueil-Malmaison Cedex (FR)**
• **TEIXEIRA, David**
**92852 Rueil-Malmaison Cedex (FR)**
• **SAEEDI, Navid**
**92852 Rueil-Malmaison Cedex (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
EP-A1- 1 659 331      EP-A1- 2 990 714
FR-A1- 2 606 061      FR-A1- 2 928 439
GB-A- 131 155          US-A- 1 564 854
US-A1- 2010 089 927    US-A1- 2017 247 877
US-B2- 8 613 190

**EP 3 942 217 B1**

(52) Classification Coopérative des Brevets (CPC):
(Cont.)F17C 2221/031; F17C 2223/0123;
F17C 2223/036; F17C 2227/0157; F17C 2260/012;
F17C 2260/017; F17C 2265/07; F17C 2270/0147;
F17C 2270/0581; Y02E 60/16

## Description

### Domaine technique

La présente invention concerne principalement le domaine de stockage d'énergie par air comprimé mais pourrait s'appliquer à d'autres systèmes de réservoirs sous pression.

La production d'électricité à partir d'énergies renouvelables, par exemple par l'intermédiaire de panneaux solaires, ou d'éoliennes terrestres ou marines, est en plein essor. Les principaux inconvénients de ces moyens de production sont l'intermittence de la production et la possible non-adéquation entre la période de production et la période de consommation. Il est donc important de disposer d'un moyen de stockage de l'énergie lors de la production pour la restituer lors d'une période de consommation.

Il existe de nombreuses technologies permettant cet équilibre.

Parmi elles, la plus connue est la Station de Transfert d'Eau par Pompage (STEP) qui consiste en l'utilisation de deux réservoirs d'eau à des altitudes différentes. L'eau est pompée du bassin inférieur vers le bassin supérieur lors de la phase de charge. L'eau est ensuite envoyée vers une turbine, en direction du bassin inférieur, lors de la décharge.

L'utilisation de batteries de différents types (lithium, nickel, sodium-soufre, plomb-acide...) peut également répondre à ce besoin de stockage d'énergie.

Une autre technologie, le stockage d'énergie par rotor (FES pour Flywheel Energy Storage) consiste à accélérer un rotor (volant) à une vitesse très élevée et à maintenir l'énergie dans le système sous forme d'énergie cinétique. Lorsque l'énergie est extraite de ce système FES, la vitesse de rotation du volant est réduite en conséquence du principe de conservation de l'énergie. L'ajout d'énergie au système FES entraîne, en conséquence, une augmentation de la vitesse du volant.

La technologie de stockage d'énergie par utilisation d'un gaz comprimé, (souvent de l'air comprimé) est prometteuse. L'énergie produite et non consommée est utilisée pour comprimer de l'air à des pressions comprises entre 40 bar et 200 bar à l'aide de compresseurs (pouvant être multi-étagés). Lors de la compression, la température de l'air augmente. Afin de limiter le coût des réservoirs de stockage et minimiser la consommation d'électricité du compresseur, l'air peut être refroidi entre chaque étage de compression. L'air comprimé est alors stocké sous pression, soit dans des cavités naturelles (cavernes), soit dans des réservoirs artificiels.

Lors de la phase de production d'électricité, l'air stocké est alors envoyé dans des turbines afin de produire de l'électricité. Lors de la détente, l'air se refroidit. Afin d'éviter des températures trop basses (-50°C) entraînant des dommages dans les turbines, l'air peut être réchauffé avant sa détente. De telles installations fonctionnent depuis un certain nombre d'années déjà, comme par exemple l'unité de Huntorf en Allemagne fonctionnant depuis 1978 ou celle de Macintosh aux USA (Alabama) fonctionnant depuis 1991. Ces deux installations ont la particularité d'utiliser l'air comprimé stocké pour alimenter des turbines à gaz. Ces turbines à gaz brûlent du gaz naturel en présence d'air sous pression afin de générer des gaz de combustion très chauds (550°C et 825°C) et à haute pression (40 bar et 11 bar) avant de les détendre dans des turbines générant de l'électricité. Ce type de procédé émet du dioxyde de carbone.

Il existe une variante en développement. Il s'agit d'un procédé dit adiabatique dans lequel la chaleur issue de la compression de l'air est récupérée, stockée et restituée à l'air avant de le détendre. Il s'agit de la technologie AACAES (issue de l'anglais « Advanced Adiabatic Compressed Air Energy Storage »).

Dans un système AACAES, l'air comprimé est stocké dans un réservoir de manière indépendante au stockage de chaleur. Dans un tel système, l'air est stocké à une température proche de la température ambiante (à priori inférieure à 50°).

### Technique antérieure

Un réservoir conforme au préambule de la revendication 1 est connu de EP2990714 A1.

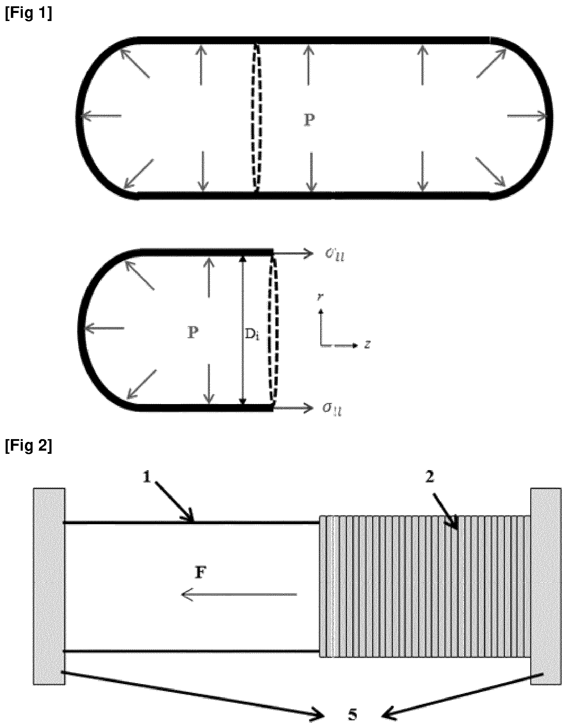

A ce jour, les réservoirs d'air comprimé et de manière plus large, les réservoirs sous pression, sont des capacités fermées constituées d'au moins deux extrémités, aussi appelées « fonds », et éventuellement reliée par une partie intermédiaire tel que sur la Fig 1, où P représente la pression interne. Sur cette figure, le réservoir est représenté, de manière non limitative par une partie cylindrique (la direction r étant la direction radiale et la direction z la direction axiale d'un repère cylindrique associé au réservoir - ce repère est utilisé sur les autres figures et ne sera pas re-détaillé sur chaque figure) de diamètre interne $D_i$. Ainsi, ce type de réservoirs peut être par exemple, une sphère constituée par deux demi-sphères ou bien par une capacité cylindrique constituée de deux fonds reliés entre eux par une section cylindrique. Les liaisons entre les différentes parties sont rigides, de type encastrement.

De plus, ces réservoirs sont le plus souvent en acier, pour résister à des pressions importantes. Compte tenu des volumes de stockage important et des pressions élevées, le coût de réalisation de ces réservoirs de pression de grand volume est très élevé notamment à cause de la masse d'acier nécessaire.

Dans un réservoir cylindrique fermé, les effets de fond, issus de l'application de la pression interne sur les fonds du réservoir, génèrent des efforts de traction dans le sens longitudinal et donc des contraintes axiales σll, tel qu'illustrées sur la Fig. 1. Quelle que soit la forme du fond (plate, bombée, hémisphérique, etc.), les effets de fond de ce type de réservoir génèrent la contrainte longitudinale moyenne suivante dans la partie courante du réservoir :

[Math 1]

$$\sigma_{ll} = \frac{P\,D_i^2}{4\,t\,(D_i + t)}$$

Où P : est la pression appliquée dans le réservoir
$D_i$: le diamètre interne du réservoir
t : l'épaisseur de la paroi du réservoir au niveau de la partie cylindrique

Lorsque le réservoir de pression est à paroi mince, on obtient :

[Math 2]

$$\sigma_{ll} \cong \frac{P\,D_i}{4\,t}$$

On entend par un réservoir de pression à paroi mince, un réservoir de pression dont l'épaisseur du réservoir est très faible devant son diamètre (par épaisseur faible devant son Diamètre, on entend un rapport t/Di<5%).

Par ailleurs, on connaît le principe de tuyaux en béton précontraint, tuyaux principalement destinés au transfert de fluide (assainissement, transfert d'eau, etc.) avec des pressions de service faibles (inférieures à 20 bar et le plus souvent inférieures à 5 bar).

La demande de brevet FR 3 055 942 A1 porte sur la section courante des tuyaux mixtes en acier et béton précontraint.

Toutefois, ces différentes solutions génèrent toutes des réservoirs de masse importante et des coûts de fabrication élevés.

Pour remédier aux inconvénients précités, la présente invention concerne un réservoir de pression comprenant une partie tubulaire et deux fonds, les deux fonds étant positionnés aux extrémités de ladite partie tubulaire, la partie tubulaire comprenant une paroi cylindrique et au moins une première nappe d'éléments de renforts circonférentiels. La première nappe d'éléments de renforts circonférentiels est enroulée autour de la paroi cylindrique qui sert d'embase rigide pour l'enroulement, de telle sorte que le module d'élasticité du matériau de la paroi cylindrique est inférieur au module d'élasticité du matériau de la première nappe d'éléments de renforts circonférentiels

**Résumé de l'invention**

L'invention concerne un réservoir conformément à la revendication 1.

De préférence, le module d'élasticité du matériau de la paroi cylindrique est inférieur d'au moins 10%, de préférence d'au moins 30%, au module d'élasticité du matériau de ladite première nappe d'éléments de renforts circonférentiels.

Selon un mode de réalisation de l'invention, au moins un desdits deux fonds est un fond bombé, de préférence sphérique ou hémisphérique.

Avantageusement, le réservoir comprend au moins une deuxième nappe d'éléments de renforts axiaux, lesdits éléments de renforts axiaux s'étendant dans la direction axiale et/ou lesdits éléments de renforts axiaux comprenant un enfouissement dans le sol dudit réservoir de pression.

Selon une variante de l'invention, lesdits éléments de renforts axiaux de ladite deuxième nappe se poursuivent au niveau du fond bombé en direction de l'extrémité axiale dudit fond bombé, en formant une étoile sur ledit fond bombé.

De manière avantageuse, au moins une deuxième nappe d'éléments de renforts axiaux est positionnée à l'intérieur du cylindre intérieur défini par ladite paroi cylindrique, lesdits éléments de renforts axiaux de ladite deuxième nappe étant régulièrement répartis sur la circonférence de ladite paroi cylindrique.

Préférentiellement, au moins une deuxième nappe d'éléments de renforts axiaux est positionnée à l'extérieur de ladite partie tubulaire, lesdits éléments de renforts axiaux de ladite deuxième nappe étant régulièrement répartis sur la circonférence de ladite partie tubulaire.

Le matériau desdits éléments de renforts circonférentiels de ladite première nappe est un polymère, de préférence une fibre d'aramide, un nylon polyamide, un polypropylène, ou un polyéthylène, et de manière encore plus préférée un polyéthylène haute résistance.

De manière préférée, le matériau de ladite paroi cylindrique est un matériau métallique, de préférence un acier, ou un polymère.

Selon un mode de réalisation de l'invention, lesdits éléments de renforts circonférentiels de ladite première nappe sont noyés dans une couche de protection.

Avantageusement, lesdits éléments de renforts circonférentiels de ladite première nappe et/ou lesdits éléments de renforts axiaux de ladite deuxième nappe ont une section circulaire, sensiblement circulaire ou rectangulaire.

Le réservoir comprend au moins une connexion coulissante entre ladite paroi cylindrique et au moins un desdits deux fonds.

De préférence, ladite connexion coulissante est positionnée entre le diamètre extérieur de ladite paroi cylindrique et le diamètre intérieur dudit fond.

Préférentiellement, ladite connexion coulissante est positionnée entre le diamètre extérieur dudit fond et le diamètre intérieur de ladite paroi cylindrique.

Selon un mode de réalisation de l'invention, au moins un desdits deux fonds est encastré dans le sol.

L'invention concerne aussi un système de stockage et de récupération d'énergie comprenant au moins un moyen de compression, au moins un moyen de détente, au moins un moyen de stockage de la chaleur et au moins un réservoir d'air comprimé tel que défini précédemment.

**Liste des figures**

D'autres caractéristiques et avantages du système selon l'invention, apparaîtront à la lecture de la description ci-après d'exemples non limitatifs de réalisations, en se référant aux figures annexées et décrites ci-après.

La figure 1, déjà décrite, représente un réservoir cylindrique de pression selon l'art antérieur.

La figure 2 illustre, de manière schématique et non limitative, un mode de réalisation d'un réservoir de pression selon l'invention.

La figure 3a illustre, de manière schématique et non limitative, un mode de réalisation d'un réservoir de pression selon l'invention, comportant une nappe d'éléments de renforts circonférentiels de section rectangulaire.

La figure 3b illustre un autre mode de réalisation d'un réservoir de pression selon l'invention, comportant une nappe d'éléments de renforts circonférentiels de section circulaire.

La figure 4 illustre, de manière schématique et non limitative, un mode de réalisation d'un réservoir de pression selon l'invention, comportant une nappe d'éléments de renforts circonférentiels noyée dans une résine.

La figure 5 illustre, de manière schématique et non limitative, un mode de réalisation d'un réservoir de pression selon l'invention, comportant une nappe d'éléments de renforts circonférentiels et une nappe d'éléments de renforts axiaux, ainsi que des fonds bombés.

La figure 6 illustre, de manière schématique et non limitative, un mode de réalisation d'un réservoir de pression selon l'invention, comportant une nappe d'éléments de renforts circonférentiels et une nappe d'éléments de renforts axiaux, ainsi que des fonds plats.

La figure 7 illustre, de manière schématique et non limitative, un mode de réalisation d'un réservoir de pression selon l'invention, comportant une nappe d'éléments de renforts circonférentiels et une nappe d'éléments de renforts axiaux, ainsi que des fonds plats.

La figure 8 illustre, de manière schématique et non limitative, un autre mode de réalisation d'un réservoir de pression selon l'invention, comportant une nappe d'éléments de renforts circonférentiels et deux nappes d'éléments de renforts axiaux, ainsi que des fonds plats.

La figure 9 illustre, de manière schématique et non limitative, un mode de réalisation d'un réservoir de pression selon l'invention, comportant une nappe d'éléments de renforts circonférentiels et deux nappes d'éléments de renforts axiaux, ainsi que des connexions coulissantes avec les fonds.

La figure 10 illustre, de manière schématique et non limitative, un mode de réalisation d'un réservoir de pression selon l'invention, comportant une nappe d'éléments de renforts circonférentiels et une nappe d'éléments de renforts axiaux, ainsi que des connexions coulissantes avec les fonds.

La figure 11 illustre, de manière schématique et non limitative, un mode de réalisation d'un réservoir de pression selon l'invention, comportant une nappe d'éléments de renforts circonférentiels et deux nappes d'éléments de renforts axiaux, une connexion coulissante avec un des deux fonds et une connexion fixe avec l'autre fond.

La figure 12 illustre, de manière schématique et non limitative, un mode de réalisation d'un réservoir de pression selon l'invention, comportant une nappe d'éléments de renforts circonférentiels et une nappe d'éléments de renforts axiaux, une connexion coulissante avec un des deux fonds et une connexion fixe avec l'autre fond.

La figure 13 illustre, de manière schématique et non limitative, un mode de réalisation d'un réservoir de pression selon l'invention, comportant une nappe d'éléments de renforts circonférentiels, une connexion coulissante avec un des deux fonds et une connexion fixe avec l'autre fond, les fonds étant enfouis dans le sol.

## Description des modes de réalisation

L'invention concerne un réservoir de pression. Ce réservoir comprend une partie tubulaire et deux fonds, chacun des deux fonds étant positionnés à chaque extrémité de la partie tubulaire. Les fonds permettent de fermer le réservoir de pression de manière étanche et de délimiter un volume permettant le stockage de fluide. La partie tubulaire comprend une paroi cylindrique et au moins une première nappe d'éléments de renforts circonférentiels, enroulée autour de la paroi cylindrique, servant d'embase rigide à l'enroulement. Le module d'élasticité du matériau de la paroi cylindrique est inférieur au module d'élasticité du matériau de la première nappe d'éléments de renforts circonférentiels. De ce fait, la déformation de la paroi cylindrique tend à mettre en contact la paroi cylindrique avec les éléments de renforts circonférentiels qui participent ainsi à la reprise des efforts de pression. Ainsi, l'épaisseur de la paroi cylindrique peut être réduite car les contraintes circonférentielles liées à la pression interne sont reprises à la fois par la paroi cylindrique et à la fois par les éléments de renforts circonférentiels. La réduction de l'épaisseur de la paroi cylindrique permet de réduire le coût du réservoir. De plus, la paroi cylindrique sert à assurer l'étanchéité au fluide intérieur évitant ainsi le contact du fluide interne avec les éléments de renforts circonférentiels.

De manière avantageuse, le module d'élasticité du matériau de la paroi cylindrique peut être inférieur d'au moins 10%, de préférence d'au moins 30%, au module d'élasticité du matériau de la première nappe d'éléments de renforts circonférentiels. Ainsi, la reprise des efforts de pression par les éléments de renforts circonférentiels est facilitée, ce qui permet encore de réduire l'épaisseur de la paroi cylindrique.

Selon une variante, au moins l'un des deux fonds peut être un fond bombé, de préférence hémisphérique. En effet, ces formes permettent de réduire la masse des fonds, en assurant la résistance à la pression interne. Un fond bombé est, par définition, l'opposé d'un fond plat, en ayant une forme concave dirigée vers l'extérieur du réservoir de pression.

Selon un mode de réalisation de l'invention, le réservoir de pression peut comprendre une deuxième nappe d'éléments de renforts axiaux, ces renforts axiaux s'étendant dans la direction axiale (correspondant à l'axe de la partie tubulaire du réservoir). Alternativement ou en complément, des éléments de renforts axiaux peuvent comprendre un enfouissement dans le sol d'au moins les deux fonds du réservoir de pression. En effet, lorsque le réservoir est soumis à une pression interne, un effort appelé « effet de fond » tend à générer des contraintes axiales dans la partie tubulaire du réservoir. Les éléments de renforts axiaux permettent la reprise de l'effet de fond et ainsi, éviter que la paroi cylindrique reprenne seule ces efforts. Ainsi, la paroi cylindrique peut ne pas participer ou participer peu, à la reprise des effets de fond.

Lorsque le réservoir comprend au moins un fond bombé et au moins une deuxième nappe d'éléments de renforts axiaux, les éléments de renforts axiaux de la deuxième nappe peuvent se poursuivre au niveau du fond bombé en direction de l'extrémité axiale du fond bombé, en formant sensiblement une étoile sur le fond bombé. Ainsi, les éléments de renforts axiaux participent à la reprise des efforts dans les fonds bombés.

Selon une mise en œuvre de l'invention, au moins une deuxième nappe des éléments de renforts axiaux peut être positionnée à l'intérieur du cylindre intérieur et les éléments de renforts axiaux de la deuxième nappe peuvent être régulièrement répartis sur la circonférence de la paroi cylindrique. Cette configuration permet une bonne répartition des efforts entre les différents renforts axiaux.

Selon une autre mise en œuvre de l'invention, au moins une deuxième nappe d'éléments de renforts axiaux peut être positionnée à l'extérieur de la partie tubulaire et les éléments de renforts axiaux de la deuxième nappe peuvent être régulièrement répartis sur la circonférence de la partie tubulaire. Cette configuration permet une fabrication plus simple et ne gêne pas l'inspection interne du réservoir. Cette mise en œuvre peut être combinée à la mise en œuvre selon laquelle une deuxième nappe d'éléments de renforts axiaux peut être positionnée à l'intérieur du réservoir. Ainsi, la résistance mécanique aux effets de fond peut être améliorée.

Avantageusement, le matériau des éléments de renforts circonférentiels de la première nappe peut être un polymère, de préférence une fibre d'aramide (notamment connu sous le nom de « Kevlar »), un nylon polyamide PA, un polypropylène PP, un polyéthylène PE ou PES, par exemple du « Dyneema® » et plus particulièrement un polyéthylène haute résistance, généralement connu sous le nom de « PEHD ». Ces matériaux permettent une bonne résistance à la traction et donc une bonne reprise des contraintes circonférentielles du réservoir sous pression.

De préférence, le matériau de la paroi cylindrique peut être un matériau métallique, de préférence un acier, ou un polymère. Ainsi, l'étanchéité au fluide intérieur peut être améliorée.

Selon une variante de l'invention, les éléments de renforts circonférentiels de la première nappe peuvent être noyés dans une couche de protection. Cette couche peut permettre la protection des éléments de renforts circonférentiels vis-à-vis de dommages chimiques et/ou physiques pour améliorer la résistance du système par exemple à l'humidité, aux rayons ultraviolets ou à un environnement extérieur agressif. Cette couche de protection peut être mise en œuvre par exemple par projection ou injection d'un matériau. Cette couche peut être par exemple une résine telle qu'une résine époxy.

En outre, les éléments de renforts circonférentiels de la première nappe et/ou les éléments de renfort axiaux de la deuxième nappe peuvent avoir une section circulaire, sensiblement circulaire ou rectangulaire. La section circulaire est simple à fabriquer et donc peut présenter un coût plus bas, notamment dans le cas d'utilisation de cordes comprenant un ou plusieurs torons tordus ensemble. La forme rectangulaire est avantageuse pour que l'enroulement des renforts circonférentiels autour de la paroi cylindrique forme une couche quasiment continue. La forme rectangulaire peut par exemple être réalisée à partir de torons tressés plats, qui présentent l'avantage d'être simple à fabriquer. Ainsi, cette forme de renfort permet une optimisation de l'épaisseur de la partie tubulaire du réservoir et de sa résistance à la pression et évite les effets locaux de la paroi cylindrique entre les tours des éléments de renforts circonférentiels.

Selon un mode de réalisation avantageux de l'invention, le réservoir de pression peut comprendre au moins une connexion coulissante entre la paroi cylindrique et au moins un des deux fonds. En effet, la pression interne du réservoir crée un effet de fond par application de la pression sur les fonds. Cet effet de fond génère un effort de traction axiale dans la partie tubulaire du réservoir. La connexion coulissante permet de réduire voire d'annuler l'effet de fond dans la partie tubulaire en permettant à l'un des fonds au moins de coulisser axialement.

Selon une mise en œuvre de l'invention, la connexion coulissante peut être positionnée entre le diamètre extérieur de la paroi cylindrique et le diamètre intérieur du fond. Cette configuration permet une mise en place plus simple avec un fond qui vient entourer la partie tubulaire.

Selon une autre mise en œuvre de l'invention, la connexion coulissante peut être positionnée entre le diamètre intérieur de la paroi cylindrique et le diamètre extérieur du fond. Cette mise en œuvre permet d'annuler l'effet de fond sur la partie tubulaire.

De manière avantageuse, l'un au moins des deux fonds peut être encastré dans le sol. Ainsi, le sol permet la reprise des effets de fond, ce qui simplifie la conception du réservoir et donc sa fabrication.

L'invention concerne aussi un système de stockage et de récupération d'énergie comprenant au moins un moyen de compression, au moins un moyen de détente, au moins un moyen de stockage de la chaleur et au moins un réservoir d'air comprimé tel que décrit précédemment. Un tel réservoir permet de réduire le coût du système de stockage et de récupération d'énergie.

La figure 2 illustre, de manière schématique et non limitative, un mode de réalisation du dispositif selon l'invention. Le réservoir de pression comprend une partie tubulaire et deux fonds plats 5. Les fonds plats 5 pourraient être remplacés par des fonds bombés, tel que des fonds hémisphériques. La partie tubulaire comprend une paroi cylindrique 1, par exemple une membrane, et une ou plusieurs nappes d'éléments de renforts circonférentiels 2. Pour des soucis de compréhension de la figure, les nappes d'éléments de renforts circonférentiels 2 sont représentées uniquement sur une partie de la paroi cylindrique 1. De préférence, les nappes d'éléments de renforts circonférentiels 2 recouvrent toute la longueur axiale de la paroi cylindrique 1. Une nappe peut être constituée par un ou plusieurs éléments de renforts circonférentiels 2. Un élément de renfort circonférentiel 2 peut, par exemple, être une corde enroulée autour de la paroi cylindrique 1. La corde offre un bon rapport résistance/masse. On peut utiliser plusieurs nappes, chacune des nappes additionnelles comprenant au moins un élément de renforts circonférentiels 2 enroulés autour de la nappe précédente. De ce fait, la résistance à la pression peut être améliorée tout en limitant le poids du réservoir et son coût de fabrication. Utiliser plusieurs nappes d'éléments de renforts circonférentiels 2 est particulièrement avantageux pour les réservoirs de pression de grand volume, notamment de grand diamètre (diamètre supérieur à 2 m), et/ou de forte pression interne (pression supérieure à 100 bar) tel que ceux utilisés pour les moyens de stockage et de récupération d'énergie.

Sur la figure 2, F représente le sens d'enroulement des éléments de renforts circonférentiels 2 autour de la paroi cylindrique 1.

Avantageusement, le matériau de la paroi cylindrique 1 a un module d'élasticité inférieur à celui du matériau des éléments de renforts circonférentiels 2. Ainsi, la déformation circonférentielle de la paroi cylindrique 1 est plus grande que celle des renforts circonférentiels 2, ce qui tend à plaquer la paroi cylindrique 1 au contact des éléments de renforts circonférentiels 2 et à partager convenablement les efforts de pression entre la paroi cylindrique 1 et les éléments de renforts circonférentiels 2. De plus, la résistance à la rupture des éléments de renforts circonférentiels 2 peut être supérieure à la résistance à la rupture de la paroi cylindrique 1. De ce fait, la résistance mécanique du réservoir est essentiellement assurée par les éléments de renforts circonférentiels 2. La paroi cylindrique 1 peut voir sa fonction alors limitée à assurer une étanchéité au fluide contenu dans le réservoir de pression, la nappe d'éléments de renforts circonférentiels 2 n'étant pas nécessairement étanche d'une part et la paroi cylindrique 1 permettant alors d'éviter le contact entre le fluide interne et les éléments de renforts circonférentiels 2 limitant par exemple leur dégradation.

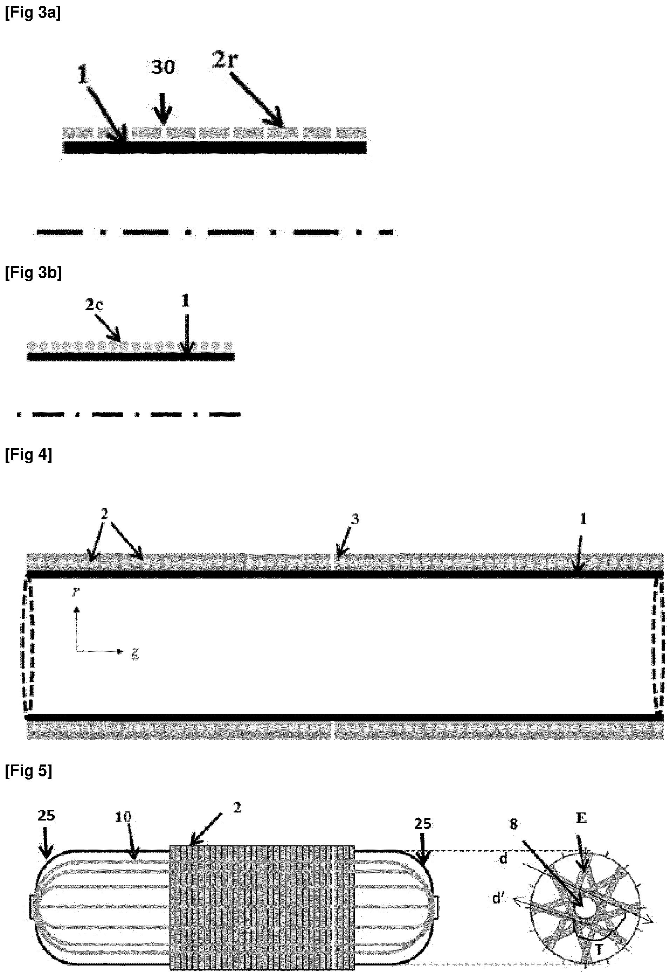

La figure 3a représente, de manière schématique et non limitative, un mode de réalisation de l'invention où autour de la paroi cylindrique 1, est enroulée un élément de renfort circonférentiel de section rectangulaire 2r. La figure 3a est une demie-vue en coupe. Un jeu 30 peut être prévu entre les tours d'enroulement des éléments de renforts circonférentiels 2r ou au contraire le jeu 30 peut être annulé de manière à ce que, lors de l'enroulement, l'élément de renfort circonférentiel du tour n+1 soit au contact de celui du tour n. Ainsi, la nappe forme alors une surface quasiment continue autour de la paroi cylindrique 1, ce qui évite le pincement potentiel de la paroi cylindrique 1 dans les jeux 30, pincement qui pourrait engendrer des pics locaux de contraintes et entraîner la rupture prématurée de la paroi cylindrique 1. La limitation de ce jeu entre les tours des éléments de renforts circonférentiels 2r permet d'éviter le flambement local et la déformée excessive de la paroi cylindrique 1 entre deux sections consécutives d'éléments de renforts circonférentiels 2r. En effet, un jeu trop important pourrait nécessiter des analyses locales et devenir un critère dimensionnant.

De plus, cette surface quasiment continue formée par les éléments de renforts circonférentiels 2r permet d'optimiser la reprise des efforts de pression par les éléments de renforts circonférentiels 2r.

La section rectangulaire des éléments de renforts circonférentiels 2r permet de plus la quasi-continuité sur l'épaisseur des éléments, l'épaisseur de ces éléments étant définie par la différence entre le diamètre extérieur des éléments de renforts circonférentiels 2r enroulés sur la paroi cylindrique 1 et leur diamètre intérieur.

La figure 3b illustre, de manière schématique et non limitative, un autre mode de réalisation de l'invention où autour de la paroi cylindrique 1, est enroulée un élément de renfort circonférentiel de section circulaire ou sensiblement circulaire 2c. La figure 3b est une demie-vue en coupe. Ce peut être par exemple une corde comprenant un ou plusieurs torons tordus ensemble. Ainsi, les éléments de renforts circonférentiels 2c ne sont pas spécifiques et permettent de limiter le coût de fabrication du réservoir. Comme pour la figure 3a, les éléments de renforts circonférentiels 2c peuvent être enroulés en se touchant ou au contraire en laissant un jeu entre chaque tour d'enroulement. Lorsqu'ils se touchent, la reprise de l'effort par les éléments de renforts circonférentiels 2c est améliorée et les déformations de la paroi cylindrique 1 entre les éléments de renforts circonférentiels 2d sont réduites.

L'invention n'est pas limitée aux configurations des figures 3a et 3b. Dans une même nappe, on peut trouver à la fois des renforts circonférentiels de section rectangulaire et des éléments de renforts circonférentiels de section circulaire ou sensiblement circulaire. Lorsque plusieurs nappes sont utilisées, l'une des nappes peut comprendre au moins un élément de renfort circonférentiel de section rectangulaire et une autre nappe peut comprendre au moins un élément de renfort circonférentiel de section circulaire ou sensiblement circulaire.

La figure 4 illustre, de manière schématique et non limitative, un autre mode de réalisation d'un réservoir de pression selon l'invention. La figure 4 est une vue partielle du réservoir, sur laquelle les fonds ne sont pas représentés. La partie tubulaire comprend alors une paroi cylindrique 1, au moins une nappe d'éléments de renforts circonférentiels 2 (ici de section circulaire mais pourrait être de section sensiblement circulaire ou rectangulaire). Les éléments de renforts circonférentiels 2 sont alors noyés ou recouverts par une couche de protection 3. Cette couche de protection peut alors plusieurs fonctions :

- Protéger les éléments de renforts circonférentiels 2 des agressions chimiques et/ou physiques de l'environnement extérieur tels que les rayonnements ultraviolets, l'eau extérieur ou un fluide potentiellement agressif pour le matériau des éléments de renforts circonférentiels 2.
- Participer à la reprise des efforts de pression en complément des éléments de renforts circonférentiels 2.
- Eviter le frottement entre les tours d'enroulement des éléments de renforts circonférentiels 2 et ainsi leur éviter une dégradation prématurée.
- Servir également de protection thermique.

Cette couche de protection peut être par exemple une résine, telle qu'une résine époxy.

Cette couche de protection peut être mise en œuvre par exemple par projection ou injection d'un matériau protecteur adapté.

La Figure 5 illustre de manière schématique et non limitative, une variante de l'invention. Dans cette variante, une nappe d'éléments de renforts axiaux 10 est représentée. Pour des soucis de compréhension de la figure, les nappes d'éléments de renforts circonférentiels 2 sont représentées uniquement sur une partie de la paroi cylindrique 1. De préférence, les nappes d'éléments de renforts circonférentiels 2 recouvrent toute la longueur axiale de la paroi cylindrique 1. Les éléments de renforts circonférentiels 2 sont enroulés autour de la paroi cylindrique.

Le réservoir de pression comprend deux fonds bombés 25. Les éléments de renforts axiaux 10 permettent la reprise des efforts axiaux résultant de l'effet de fond, permettant ainsi la réduction de l'épaisseur de la paroi cylindrique.

Les éléments de renforts axiaux 10 s'étendent longitudinalement le long de la paroi cylindrique et se poursuivent dans les fonds bombés jusqu'à une zone proche de l'axe du réservoir de pression. Par exemple, les éléments de renforts axiaux 10 peuvent se prolonger sur les fonds bombés 25, en entourant le corps cylindrique 8, de même axe que l'axe du réservoir et situé à l'extrémité axiale du fond bombé. Ainsi, dans un plan de coupe longitudinal, l'élément de renfort axial arrivant dans une direction d vers le corps cylindrique 8, entoure partiellement ce corps cylindrique 8 et repart dans une direction d' formant un angle T avec la direction d. De préférence, T est supérieur ou égal à 90° et de préférence proche de 180°. Ainsi, la tenue des éléments de ren forts axiaux sur le fond bombé est améliorée autour du corps cylindrique 8.

Ainsi, les différents éléments de renforts axiaux 10 arrivant et repartant autour du corps cylindrique 8 situé à l'extrémité axiale du fond bombé 25 forment une étoile E comportant un nombre pair de branches (ici une étoile à 8 branches).

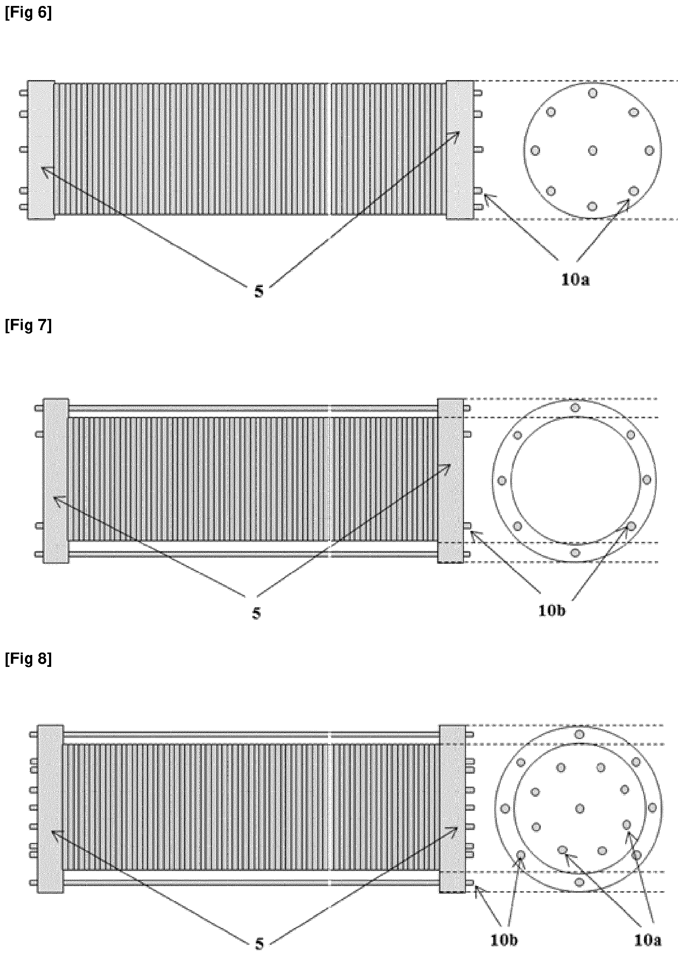

La figure 6 illustre de manière schématique et non limitative, une autre variante d'un réservoir de pression selon l'invention comprenant une nappe d'éléments de renforts axiaux 10a avec deux fonds plats 5. Les éléments de renforts axiaux 10a sont situés à l'intérieur du réservoir de pression. Le diamètre d'implantation de ces éléments de renforts axiaux 10a est donc inférieur au diamètre intérieur de la paroi cylindrique. Avantageusement, ces éléments de renforts axiaux 10a sont régulièrement répartis sur la circonférence du réservoir de pression de manière à reprendre les efforts de traction axiale équitablement entre les différents éléments de renforts axiaux 10a. De plus, un élément de renfort axial 10a peut être prévu au centre du réservoir de pression (c'est-à-dire confondu avec l'axe du réservoir de pression). Cette répartition permet également d'éviter une flexion du réservoir qui pourrait être engendrée par une mauvaise répartition circonférentielle.

Ces éléments de renforts axiaux 10a peuvent avoir une section circulaire, sensiblement circulaire, par exemple des cordes avec un ou plusieurs torons tordus ensemble. Les cordes offrent un bon rapport résistance/masse. Alternativement, d'autres sections pourraient être envisagées.

Le matériau de ces éléments de renforts axiaux 10a peut avantageusement être le même que celui des renforts circonférentiels.

Cette configuration permet une bonne reprise des efforts axiaux.

La figure 7 illustre de manière schématique et non limitative, une autre variante d'un réservoir de pression selon l'invention comprenant une nappe d'éléments de renforts axiaux 10b avec deux fonds plats 5. Les éléments de renforts axiaux 10b sont situés à l'extérieur du réservoir de pression. Le diamètre d'implantation de ces éléments de renforts axiaux 10b est donc supérieur au diamètre extérieur de la partie tubulaire. Avantageusement, ces éléments de renforts axiaux 10b sont régulièrement répartis sur la circonférence du réservoir de pression de manière à reprendre les efforts de traction axiale équitablement entre les différents éléments de renforts axiaux 10b. Cette répartition permet également d'éviter une flexion du réservoir qui pourrait être engendrée par une mauvaise répartition circonférentielle.

Ces éléments de renforts axiaux 10b peuvent avoir une section circulaire, sensiblement circulaire, par exemple des cordes avec un ou plusieurs torons tordus ensemble. Les cordes offrent un bon rapport résistance/masse. Alternativement, d'autres sections pourraient être envisagées.

Le matériau de ces éléments de renforts axiaux 10b peut avantageusement être le même que celui des renforts circonférentiels.

L'implantation des éléments de renforts axiaux 10b à l'extérieur du réservoir de pression présente l'avantage de ne pas gêner l'inspection du réservoir, notamment pour les contrôles périodique de service. De plus, elle permet également d'éviter aux éléments de renforts axiaux 10b de devoir traverser le corps du réservoir au niveau des fonds 5 et donc d'éviter les risques de fuite associée.

La figure 8 illustre, de manière schématique et non limitative, une quatrième variante du réservoir de pression disposant de renforts axiaux. Dans cette variante, le réservoir de pression comprend deux nappes d'éléments de renforts axiaux 10a et 10b avec deux fonds plats 5. La nappe d'éléments de renforts axiaux 10b est située à l'extérieur du réservoir de pression (comme sur la figure 7) alors que la nappe d'éléments de renforts axiaux 10a est située à l'intérieur du réservoir de pression (comme sur la figure 6).

Les éléments de renforts axiaux 10a et 10b peuvent avoir une section circulaire, sensiblement circulaire, par exemple des cordes avec un ou plusieurs torons tordus ensemble. Alternativement, d'autres sections pourraient être envisagées.

Le matériau de ces éléments de renforts axiaux 10a et 10b peut avantageusement être le même que celui des renforts circonférentiels.

Cette configuration permet une reprise des efforts de traction supérieure.

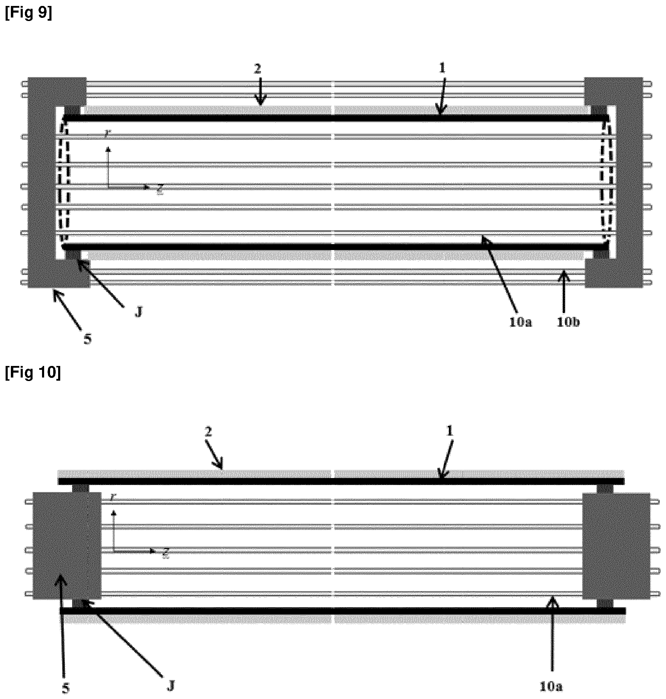

Les figures 9 à 13 illustrent, de manière schématique et non limitative, des modes de réalisation de réservoir de pression comprenant, en sus, au moins une connexion coulissante J entre un des fonds 5, 5a ou 5b et la partie tubulaire du réservoir de pression.

La connexion coulissante J permet un mouvement axial relatif entre un fond 5, 5a ou 5b et la partie tubulaire. De ce fait, l'effet de fond induit par la pression sur le fond 5, 5a ou 5b n'est repris que partiellement, voire totalement annulée sur la partie tubulaire. Ainsi, la masse de la partie tubulaire peut être réduite, tout comme son coût.

**EP 3 942 217 B1**

La connexion coulissante J peut notamment comprendre des joints en élastomère ou une projection d'un produit à base de polymère.

Sur ces figures, les références 5, 5a et 5b sont relatives respectivement à un fond de manière générale, à un fond relié par une connexion coulissante à la partie tubulaire et à un fond fixé rigidement à la partie tubulaire.

Sur les figures 9 à 11, la partie tubulaire comprend une paroi cylindrique 1 et une nappe d'éléments de renforts circonférentiels 2. Les éléments de renforts axiaux 10a sont situés à l'intérieur du réservoir de pression ; les éléments de renforts axiaux 10b sont situés à l'extérieur du réservoir de pression. Les éléments de renforts axiaux 10a et 10b s'étendent longitudinalement le long de l'axe du réservoir de pression. Toutefois, la réalisation des connexions coulissantes est indépendante de l'utilisation ou non d'éléments de renforts axiaux, et de leurs emplacements.

Sur la figure 9, une connexion coulissante J est située entre chacun des deux fonds plats 5 et la partie tubulaire. De plus, chacune de ces connexions coulissantes J est positionnée entre le diamètre extérieur de la paroi cylindrique 1 et le diamètre intérieur du fond plat 5. De ce fait, l'effort axial vu par la paroi cylindrique est un effort de compression.

Les éléments de renforts axiaux 10a et 10b des deux nappes internes et externes au réservoir de pression, permettent la tenue des fonds par la reprise des effets de fond.

Sur la figure 10, une connexion coulissante J est située entre chacun des deux fonds plats 5 et la partie tubulaire. De plus, chacune de ces connexions coulissantes J est positionnée entre le diamètre intérieur de la paroi cylindrique 1 et le diamètre extérieur du fond plat 5. De ce fait, l'effet de fond dû à la pression sur les fonds n'est pas retransmis à la partie tubulaire. De plus, la partie tubulaire ne subit aucun effort axial, ce qui est une configuration particulièrement avantageuse.

La reprise de l'effet de fond est ici réalisée par la nappe interne d'éléments de renforts axiaux 10a. La reprise de l'effet de fond est facilitée dans cette configuration par rapport à celle de la figure 9.

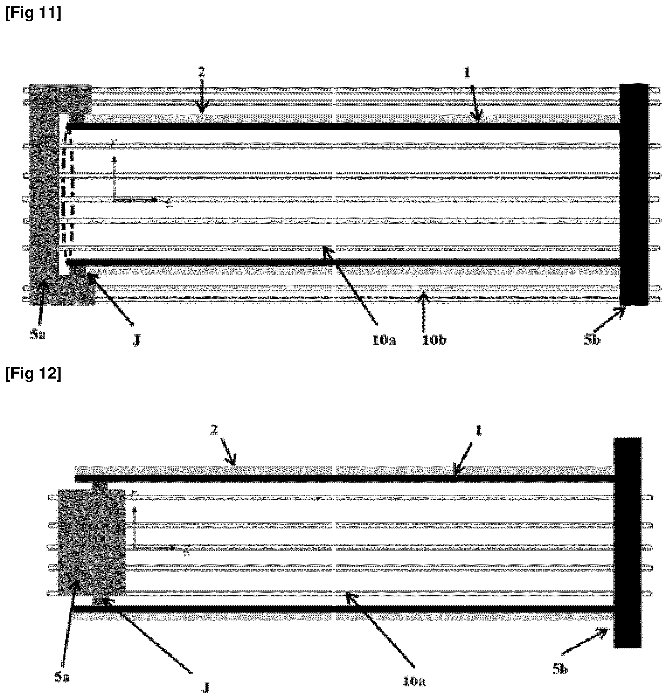

La figure 11 présente une configuration où l'un des fonds 5b est fixé rigidement à la partie tubulaire. L'autre fond 5a est lié à la partie tubulaire par l'intermédiaire d'une connexion coulissante J. La connexion coulissante J est positionnée entre le diamètre extérieur de la paroi cylindrique 1 et le diamètre intérieur du fonds plat 5a. Ainsi, la paroi cylindrique 1 subit un effort de compression induit par la pression sur la section de la paroi cylindrique 1, ce qui représente un effort relativement restreint par rapport à un effort de traction dû à l'effet de fond induit par la pression sur toute la surface du fond plat 5a/5b.

L'effet de fond est repris par les éléments de renforts axiaux 10a et 10b des deux nappes.

La figure 12 présente une variante de la figure 11 où la connexion coulissante J est positionnée entre le diamètre extérieur du fond 5a et le diamètre intérieur de la paroi cylindrique 1. Dans cette configuration, la paroi cylindrique 1, et plus généralement la partie tubulaire, n'est soumise à aucun effort de traction/compression.

Les effets de fond sont repris par les éléments de renforts axiaux 10a de la nappe interne.

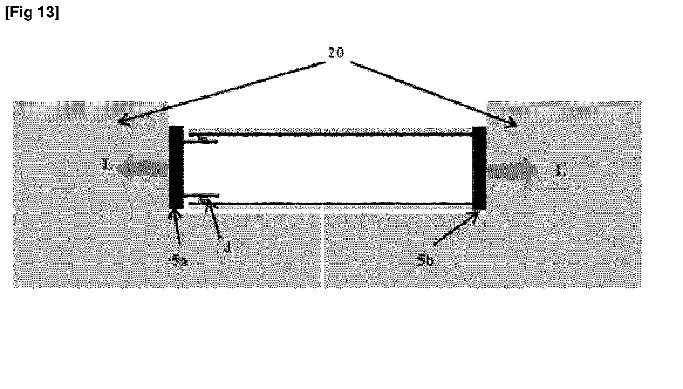

La figure 13 illustre une variante dans laquelle le réservoir comprend un fond 5b fixé à la partie tubulaire et un fond 5a relié à la partie tubulaire par l'intermédiaire d'une connexion coulissante J. Dans cette variante, les éléments de renforts axiaux comprennent l'enfouissement du réservoir de pression dans le sol 20. Plus précisément, les deux fonds plats 5a et 5b sont enfouis dans le sol 20 et le sol peut alors servir de butée au déplacement axial d'au moins un des deux fonds : le sol permet donc de limiter le déplacement axial d'au moins un des deux fonds. Alternativement, les fonds pourraient ne pas être plats mais par exemple bombés. Cet encastrement dans le sol 20 fait office d'éléments de renforts axiaux en reprenant directement les effets de fond représentés par les flèches L.

Le réservoir peut aussi être totalement enfoui, c'est-à-dire par uniquement enfoui au niveau des fonds mais être totalement recouvert sur sa surface externe par le sol 20.

**Revendications**

1. Réservoir de pression, comprenant une partie tubulaire et deux fonds (5), lesdits deux fonds (5) étant positionnés aux extrémités de ladite partie tubulaire, ladite partie tubulaire comprenant une paroi cylindrique (1) et au moins une première nappe d'éléments de renforts circonférentiels (2), ladite première nappe d'éléments de renforts circonférentiels (2) étant enroulée autour de ladite paroi cylindrique (1), **caractérisé en ce que** le module d'élasticité du matériau de la paroi cylindrique (1) est inférieur au module d'élasticité du matériau de ladite première nappe d'éléments de renforts circonférentiels (2), **en ce que** le matériau desdits éléments de renforts circonférentiels (2) de ladite première nappe est un polymère, de préférence une fibre d'aramide, un nylon polyamide, un polypropylène, ou un polyéthylène, et de manière encore plus préférée un polyéthylène haute résistance et **en ce que** le réservoir comprend au moins une connexion coulissante (J) entre ladite paroi cylindrique (1) et au moins un desdits deux fonds (5), ladite connexion coulissante (J) permettant un mouvement axial relatif entre un fond (5) et ladite partie tubulaire.

2. Réservoir selon la revendication 1, pour lequel le module d'élasticité du matériau de la paroi cylindrique (1) est inférieur d'au moins 10%, de préférence d'au moins 30%, au module d'élasticité du matériau de ladite première nappe d'éléments de renforts circonférentiels (2).

3. Réservoir selon l'une des revendications précédentes, pour lequel au moins un desdits deux fonds (5) est un fond bombé, de préférence sphérique ou hémisphérique.

4. Réservoir selon l'une des revendications précédentes, pour lequel le réservoir comprend au moins une deuxième nappe d'éléments de renforts axiaux (10), lesdits éléments de renforts axiaux (10) s'étendant dans la direction axiale.

5. Réservoir selon les revendications 3 et 4, pour lequel lesdits éléments de renforts axiaux (10) de ladite deuxième nappe se poursuivent au niveau du fond bombé en direction de l'extrémité axiale dudit fond bombé (25), en formant une étoile € sur ledit fond bombé.

6. Réservoir selon la revendication 4, pour lequel ladite deuxième nappe d'éléments de renforts axiaux (10a) est positionnée à l'intérieur du cylindre intérieur défini par ladite paroi cylindrique, lesdits éléments de renforts axiaux (10a) de ladite deuxième nappe étant régulièrement répartis sur la circonférence de ladite paroi cylindrique.

7. Réservoir selon la revendication 4 ou 6, pour lequel ladite deuxième nappe d'éléments de renforts axiaux (10b) est positionnée à l'extérieur de ladite partie tubulaire, lesdits éléments de renforts axiaux (10b) de ladite deuxième nappe étant régulièrement répartis sur la circonférence de ladite partie tubulaire.

8. Réservoir selon l'une des revendications précédentes, pour lequel de matériau de ladite paroi cylindrique (1) est un matériau métallique, de préférence un acier, ou un polymère.

9. Réservoir selon l'une des revendications précédentes, pour lequel lesdits éléments de renforts circonférentiels (2) de ladite première nappe sont noyés dans une couche de protection (3).

10. Réservoir selon l'un des revendications précédentes, pour lequel lesdits éléments de renforts circonférentiels (2) de ladite première nappe et/ou lesdits éléments de renforts axiaux (10) de ladite deuxième nappe ont une section circulaire, sensiblement circulaire (2c) ou rectangulaire (2r).

11. Réservoir selon l'une des revendications précédentes, pour lequel ladite connexion coulissante (J) est positionnée entre le diamètre extérieur de ladite paroi cylindrique (1) et le diamètre intérieur dudit fond (5).

12. Réservoir selon l'une des revendications précédentes, pour lequel ladite connexion coulissante (J) est positionnée entre le diamètre extérieur dudit fond (5) et le diamètre intérieur de ladite paroi cylindrique (1).

13. Système de stockage et de récupération d'énergie comprenant au moins un moyen de compression, au moins un moyen de détente, au moins un moyen de stockage de la chaleur et au moins un réservoir d'air comprimé selon l'une des revendications précédentes.


**Patentansprüche**

1. Druckbehälter, der einen röhrenförmigen Teil und zwei Böden (5) umfasst, wobei die beiden Böden (5) an den Enden des röhrenförmigen Teils angeordnet sind, wobei der röhrenförmige Teil eine zylindrische Wand (1) und mindestens eine erste Lage aus umfänglichen Verstärkungselementen (2) umfasst, wobei die erste Lage aus umfänglichen Verstärkungselementen (2) um die zylindrische Wand (1) gewunden ist, **dadurch gekennzeichnet, dass** der Elastizitätsmodul des Materials der zylindrischen Wand (1) kleiner als der Elastizitätsmodul des Materials der ersten Lage aus umfänglichen Verstärkungselementen (2) ist, dass das Material der umfänglichen Verstärkungselemente (2) der ersten Lage ein Polymer, vorzugsweise eine Aramidfaser, ein Nylonpolyamid, ein Polypropylen oder ein Polyethylen und noch bevorzugter ein hochfestes Polyethylen ist und dass der Behälter mindestens eine Gleitverbindung (J) zwischen der zylindrischen Wand (1) und mindestens einem der beiden Böden (5) umfasst, wobei die Gleitverbindung (J) eine relative axiale Bewegung zwischen einem Boden (5) und dem röhrenförmigen Teil ermöglicht.

2. Behälter nach Anspruch 1, wobei der Elastizitätsmodul des Materials der zylindrischen Wand (1) um mindestens 10 %, vorzugsweise um mindestens 30 %, kleiner als der Elastizitätsmodul des Materials der ersten Lage aus umfänglichen Verstärkungselementen (2) ist.

3. Behälter nach einem der vorhergehenden Ansprüche, wobei mindestens einer der beiden Böden (5) ein gewölbter, vorzugsweise kugelförmiger oder halbkugelförmiger Boden ist.

4. Behälter nach einem der vorhergehenden Ansprüche, wobei der Behälter mindestens eine zweite Lage aus axialen Verstärkungselementen (10) umfasst, wobei sich die axialen Verstärkungselemente (10) in der axialen Richtung erstrecken.

5. Behälter nach den Ansprüchen 3 und 4, wobei sich die axialen Verstärkungselemente (10) der zweiten Lage an dem gewölbten Boden in Richtung des axialen Endes des gewölbten Bodens (25) fortsetzen, wobei sie einen Stern € an dem gewölbten Boden bilden.

6. Behälter nach Anspruch 4, wobei die zweite Lage aus axialen Verstärkungselementen (10a) im Inneren des durch die zylindrische Wand definierten Innenzylinders angeordnet ist, wobei die axialen Verstärkungselemente (10a) der zweiten Lage regelmäßig über den Umfang der zylindrischen Wand verteilt sind.

7. Behälter nach Anspruch 4 oder 6, wobei die zweite Lage aus axialen Verstärkungselementen (10b) an der Außenseite des röhrenförmigen Teils angeordnet ist, wobei die axialen Verstärkungselemente (10b) der zweiten Lage regelmäßig über den Umfang des röhrenförmigen Teils verteilt sind.

8. Behälter nach einem der vorhergehenden Ansprüche, wobei das Material der zylindrischen Wand (1) ein metallisches Material, vorzugsweise ein Stahl, oder ein Polymer ist.

9. Behälter nach einem der vorhergehenden Ansprüche, wobei die umfänglichen Verstärkungselemente (2) der ersten Lage in eine Schutzschicht (3) eingebettet sind.

10. Behälter nach einem der vorhergehenden Ansprüche, wobei die umfänglichen Verstärkungselemente (2) der ersten Lage und/oder die axialen Verstärkungselemente (10) der zweiten Lage einen kreisförmigen, im Wesentlichen kreisförnigen (2c) oder rechteckigen (2r) Querschnitt aufweisen.

11. Behälter nach einem der vorhergehenden Ansprüche, wobei die Gleitverbindung (J) zwischen dem Außendurchmesser der zylindrischen Wand (1) und dem Innendurchmesser des Bodens (5) angeordnet ist.

12. Behälter nach einem der vorhergehenden Ansprüche, wobei die Gleitverbindung (J) zwischen dem Außendurchmesser des Bodens (5) und dem Innendurchmesser der zylindrischen Wand (1) angeordnet ist.

13. System zur Speicherung und Rückgewinnung von Energie, das mindestens eine Verdichtungseinrichtung, mindestens eine Entspannungseinrichtung, mindestens eine Wärmespeichereinrichtung und mindestens einen Druckluftbehälter nach einem der vorhergehenden Ansprüche umfasst.

**Claims**

1. Pressure vessel, comprising a tubular part and two bottoms (5), said two bottoms (5) being positioned at the ends of said tubular part, said tubular part comprising a cylindrical wall (1) and at least one first ply of circumferential reinforcing elements (2), said first ply of circumferential reinforcing elements (2) being wound around said cylindrical wall (1), **characterized in that** the modulus of elasticity of the material of the cylindrical wall (1) is lower than the modulus of elasticity of the material of said first ply of circumferential reinforcing elements (2), **in that** the material of said circumferential reinforcing members (2) of said first ply is a polymer, preferably an aramid fibre, a nylon polyamide, a polypropylene, or a polyethylene, and even more preferably a high-strength polyethylene and **in that** the vessel comprises at least one sliding connection (J) between said cylindrical wall (1) and at least one of said two bottoms (5), said sliding connection (J) allowing a relative axial movement between a bottom (5) and said tubular part.

2. Vessel according to Claim 1, wherein the modulus of elasticity of the material of the cylindrical wall (1) is at least 10%, preferably at least 30%, lower than the modulus of elasticity of the material of said first ply of circumferential reinforcing elements (2).

3. Vessel according to either of the preceding claims, wherein at least one of said two bottoms (5) is a convex, preferably spherical or hemispherical, bottom.

4. Vessel according to one of the preceding claims, wherein the vessel comprises at least one second ply of axial reinforcing elements (10), said axial reinforcing elements (10) extending in the axial direction.

5. Vessel according to Claims 3 and 4, wherein said axial reinforcing elements (10) of said second ply continue at the convex bottom in the direction of the axial end of said convex bottom (25), forming a star € on said convex bottom.

6. Vessel according to Claim 4, wherein said second ply of axial reinforcing elements (10a) is positioned inside the inner cylinder defined by said cylindrical wall, said axial reinforcing elements (10a) of said second ply being regularly distributed around the circumference of said cylindrical wall.

7. Vessel according to Claim 4 or 6, wherein said second ply of axial reinforcing elements (10b) is positioned outside said tubular part, said axial reinforcing elements (10b) of said second ply being regularly distributed around the circumference of said tubular part.

8. Vessel according to one of the preceding claims, wherein the material of said cylindrical wall (1) is a metallic material, preferably a steel, or a polymer.

9. Vessel according to one of the preceding claims, wherein said circumferential reinforcing elements (2) of said first ply are embedded in a protective layer (3).

10. Vessel according to one of the preceding claims, wherein said circumferential reinforcing elements (2) of said first ply and/or said axial reinforcing elements (10) of said second ply have a circular, substantially circular (2c) or rectangular (2r) section.

11. Vessel according to one of the preceding claims, wherein said sliding connection (J) is positioned between the outer diameter of said cylindrical wall (1) and the inner diameter of said bottom (5).

12. Vessel according to one of the preceding claims, wherein said sliding connection (J) is positioned between the outer diameter of said bottom (5) and the inner diameter of said cylindrical wall (1).

13. System for storing and recovering energy, comprising at least one compression means, at least one expansion means, at least one heat storage means and at least one compressed air vessel according to one of the preceding claims.

[Fig 1]

[Fig 2]

[Fig 3a]

[Fig 3b]

[Fig 4]

[Fig 5]

[Fig 6]

[Fig 7]

[Fig 8]

[Fig 9]

[Fig 10]

[Fig 11]

[Fig 12]

[Fig 13]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 2990714 A1
- FR 3055942 A1